# EUROPÄISCHE PATENTSCHRIFT

(11) **EP 1 855 836 B1**
(45) Veröffentlichungstag und Bekanntmachung des Hinweises auf die Patenterteilung: **18.02.2009**
(21) Anmeldenummer: 06707187.8
(22) Anmeldetag: 22.02.2006
(51) Int. Cl.: B23Q 11/08, F21S 8/00, F21W 131/403

(54) **WERKZEUGMASCHINE MIT SCHUTZKABINE UND BELEUCHTUNGSSYSTEM**
MACHINE TOOL COMPRISING A PROTECTIVE CABINET AND ILLUMINATION SYSTEM
MACHINE-OUTIL COMPORTANT UNE CABINE DE PROTECTION ET UN SYSTEME D'ECLAIRAGE

(30) Priorität: 22.02.2005 DE 202005002837 U
(43) Veröffentlichungstag der Anmeldung: 21.11.2007
(73) Patentinhaber: DECKEL MAHO Pfronten GmbH, 87459 Pfronten (DE)
(72) Erfinder: SEITZ, Reinhold, 87659 Hopferau (DE); HAGN, Joseph, A-6850 Dornbirn (AT)
(74) Vertreter: Beetz & Partner
(86) Internationale Anmeldenummer: PCT/EP2006/001626
(87) Internationale Veröffentlichungsnummer: WO 2006/089740

(56) Entgegenhaltungen:
- EP-A- 1 389 711
- CA-A- 2 475 580

## Beschreibung

Die Erfindung betrifft eine Werkzeugmaschine mit Schutzkabine und Beleuchtungssystem, das mindestens eine im Innenraum der Schutzkabine installierte Entladungslampe aufweist.

Moderne Werkzeugmaschinen und Bearbeitungszentren besitzen regelmäßig eine Schutzkabine, die den Arbeitsraum und ggf. auch Nebenaggregate während des Arbeitsbetriebes umgibt. Für den Zugang zum Arbeitsraum sind geradlinig oder auf Rundführungen bewegbare Schiebetüren vorgesehen. Um den Betrieb und den Arbeitsfortschritt überwachen zu können, weisen die Seitenwände und auch die Schiebetüren Sichtfenster in jeweils geeigneter Anordnung und Größe auf. Für die Arbeiten innerhalb des Arbeitsraums bei geöffneten Schiebetüren ebenso wie zur Überwachung der Arbeitsabläufe sind an geeigneten Stellen der Innenwandung der Schutzkabine eine oder meist mehrere Lampen vorgesehen, die eine ausreichend große Leuchtkraft haben, damit z.B. Spanvorgänge auch dann sicher beobachtet und verfolgt werden können, wenn die Arbeitsraumatmosphäre durch Tröpfchennebel der Schmier- und Kühlflüssigkeit sowie durch Feinstspäne verunreinigt ist.

Für Schutzkabinen von Werkzeugmaschinen konzipierte Beleuchtungssysteme enthalten in der Regel eine oder mehrere Einbauleuchten, wie sie z.B. in der EP 1 389 711 beschrieben sind. Diese Einbauleuchten werden einzeln oder auch zu mehreren im Innenraum der Schutzkabinen an einer Kabinenwand montiert und enthalten langgestreckte Gasentladungslampen, die als sog. Leuchtstoffröhren ausgeführt und zu mehreren parallel nebeneinander in einem Gehäuse montiert sind, das auch die erforderlichen elektrischen Schaltungen enthält. Diese Leuchstoffröhren strahlen zumindest in ihrer Längserstreckung großflächig und mit gleichmäßiger Leuchtdichte ab. Typbedingt beträgt die Höhe dieser Einbauleuchten etwa 100 mm, sodass sie bei ihrer Installation an der Innenseite einer Kabinenwand in dieser Bauhöhe in den Innenraum der Kabine hineinragen. Aufgrund dieser Abmessungen der Einbauleuchten ist die Auswahl ihrer Positionierung begrenzt, da in dem jeweiligen Arbeitsraum innerhalb der Schutzkabine nur bestimmten Stellen zur Plazierung und Montage der langgestreckten Lichtkörper geeignet sind. Die Leuchten werden meist in den oberen oder seitlichen Eckbereichen der Schutzkabine eingebaut, wobei Abstriche hinsichtlich einer optimalen Ausleuchtung des Arbeitsraums in Kauf genommen werden müssen, die durch Verwendung von Leuchtstoffröhren verursacht sind.

Aus der US 2002/0163311 A1 ist eine für dielektrisch behinderte Entladungen ausgelegte Entladungslampe bekannt, die beispielsweise in einem Flachbildschirm oder einem Display in LCD-Technologie eingesetzt werden kann. Diese Entladungslampe hat eine Bodenplatte, eine transparente Deckplatte und einen mit einem Entladungsmedium gefüllten Entladungsraum zwischen den beiden Platten. Ein Elektrodensatz dient der Erzeugung von dielektrisch behinderten Entladungen im Entladungsmedium. Stützelemente sind als einstückige Bestandteile der Deckplatte ausgebildet und haben eine in Richtung der Bodenplatte verjüngte Kontur. Die Stützelemente sind in großer Anzahl gleichmäßig über die gesamte aktive Fläche der Leuchte verteilte Stützvorsprünge und bestehen aus Glas oder einem anderen transparenten Werkstoff.

In der DE 100 16 714 C2 ist eine Flachleuchte beschrieben, bei der eine Vielzahl von gleichmäßig verteilten Leuchtdioden in einem geschlossenen flachen Glasgehäuse angeordnet und zwischen der Vorder- und der Rückseite formschlüssig fixiert sind.

Aufgabe der Erfindung ist es, ein Beleuchtungssystem für eine Werkzeugmaschine zu schaffen, das eine verbesserte Ausleuchtung des Arbeitsraums und auch des weiteren Innenraums einer Schutzkabine ermöglicht.

Diese Aufgabe wird bei einer Werkzeugmaschine mit Schutzkabine und Beleuchtungssystem, das mindestens eine im Innenraum der Schutzkabine an einer Kabinenwand installierte Entladungslampe aufweist, die als großflächig abstrahlende Flachleuchte ausgebildet ist, erfindungsgemäß dadurch gelöst, daß die Flachleuchte einen flächigen Leuchtkörper enthält, der über seine gesamte Fläche mit gleichmäßiger Leuchtstärke abstrahlt und in einem flachen gasdichten Gehäuse mit einseitiger transparenter Platte gekapselt angeordnet ist.

In dem erfindungsgemäßen Beleuchtungssystem können Flachleuchten eingesetzt werden, die nach dem z.B. in der bereits zitierten US 2002/0163311 A1 oder der DE 100 48 187 A beschriebenen Prinzip funktionieren. Für die erfindungsgemäß angestrebten Wirkungen und Effekte ist es wesentlich, daß die verwendeten Flachleuchten ausreichend große Abmessungen in einer Ebene haben und in ihrem gesamten aktiven Bereich mit hoher Leuchtdichte gleichmäßig abstrahlen. Die geringe Gesamtdicke dieser Flachleuchten, die 30 mm nicht übersteigen sollte, eröffnet die Möglichkeit, die jeweilige Flachleuchte an einem vorgewählten Bereich einer Innenwandung der Schutzkabine durch geeignete Befestigungsmittel anzubringen. Da die Flachleuchte nur um den ihrer Dicke entsprechenden Betrag in den Kabineninnenraum hineinragt, wird der Innenraum der Schutzkabine und damit auch der Arbeitsraum nur unwesentlich verkleinert. Dies eröffnet die Möglichkeit, die eine oder auch mehrere Flachleuchten in den Bereichen der jeweiligen Kabinenwände oder auch der Kabinendecke zu positionieren, die eine optimierte Ausleuchtung des gesamten Arbeitsraums sowie ggf. auch von nebengeordneten Räumen im Inneren der Schutzkabine gewährleisten.

Je nach dem Maschinentyp und der Größe bzw. der Kontur der Schutzkabine kann auch die Anzahl und Position der jeweils eingesetzten Flachleuchten im Hinblick auf eine allseitig und schattenfreie Ausleuchtung des Arbeitsraums gewählt werden. Die Form der jeweils .verwendeten Flachleuchten kann mehreckig, kreisrund, oval sowie auch bogenförmig gewölbt sein. Daneben sind auch sog. Lichtbänder maglich, bei denen die Leuchten einzeln oder zu mehreren hintereinander als schmaler durchgehender oder unterbrochener leuchtender Streifen an den Kabinenwänden bzw. an der Kabinendecke angeordnet werden. Um den Innenraum der Schutzkabine nicht zu verkleinern, können die erfindungsgemäßen Flachleuchten auch in Ausschnitten in einer oder mehreren Kabinenwänden bzw. der Kabinendecke eingebaut sein, wobei hier eine dauerhafte Abdichtung erforderlich ist.

Eine bevorzugte Ausführung der erfindungsgemäß eingesetzten Flachleuchten hat einen relativ großflächigen Leuchtkörper, der über seine gesamte Fläche mit weitgehend gleichmäßiger Leuchtstärke abstrahlt und in einem formsteifen flachen gasdichten Gehäuse mit einseitiger transparenter Platte gekapselt angeordnet ist.

Weitere Vorzüge und Merkmale der Erfindung ergeben sich aus der folgenden Beschreibung einer in der Zeichnung dargestellten Werkzeugmaschine mit Schutzkabine und einer Flachleuchte. Es zeigen
- Fig. 1: eine Fräs- und Bohrmaschine mit einer Schutzkabine und ei- ner seitlichen Flachleuchte in perspektivischer Darstellung,
- Fig. 2: eine Flachleuchte im Querschnitt, und
- Fig. 3: ein anderes Ausführungsbeispiel einer Flachleuchte im Quer- schnitt.

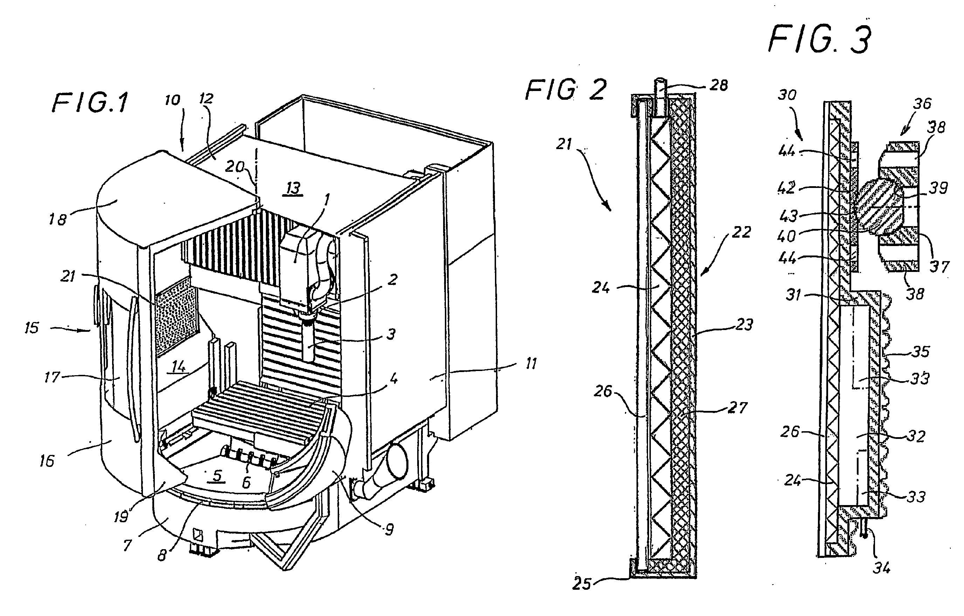

In Fig. 1 ist eine programmgesteuerte Fräs- und Bohrmaschine dargestellt, die lediglich als Beispiel für eine zweckmäßige Anordnung einer Flachleuchte anzusehen ist. Diese Werkzeugmaschine weist einen in zwei horizontalen Koordinatenachsen an einem Ständer motorisch verfahrbaren Bearbeitungskopf 1 auf, in dessen vertikaler Arbeitsspindel 2 ein Werkzeug 3 eingespannt ist. Ein Werkstücktisch 4 stützt sich auf einer Konsole ab, die in der vertikalen Koordinatenachse an der Frontseite des Maschinenständers motorisch verfahrbar ist. Die Tischfläche definiert den maximalen Arbeitsraum. Unterhalb des Werkstücktischs 4 befindet sich in einer halbrunden Bodenwanne 5 eine Drehspindel 6 für den Späneaustrag. Nach vorn wird die Bodenwanne 5 von einer halbrunden Stirnwand 7 begrenzt, die an ihrer Außenseite eine nach unten versetzte Führungsschiene 8 trägt.

Die Schutzkabine 10 besteht aus zwei rückwärtigen Seitenwänden 11, 12, einer diese verbindenden Deckwand 13 und einer vorderen Seitenwand 14, die sich im Abstand zum Werkstücktisch 4 erstreckt und den Arbeitsraum seitlich abdeckt. Ferner weist die dargestellte Schutzkabine 10 eine sog. Rundtür 15 auf, die eine zylindersegmentförmige Seitenwand 16 mit einem Fenster 17 und eine obere kreissegmentförmige Deckplatte 18 enthält. An einem unteren Schrägansatz 19, dessen Gleitfläche in die Bodenwanne führt, ist die Rundtür 15 auf der unteren Führungsschiene 8 verschiebbar abgestützt. Ferner ist die obere Deckplatte 18 um eine Vertikalachse 20 verschwenkbar geführt bzw. gelagert.

Wie ersichtlich, ist an der Innenseite der Seitenwand 14 eine großflächige Flachleuchte 21 befestigt, die in Fig. 2 im Querschnitt dargestellt ist. Die Flachleuchte 21 hat einen flachen allseitigen formsteifen Rahmen 22 aus vorzugsweise Metall, z.B. Edelstahl, mit durchgehender Rückwand 23 und eine in diesem Rahmen 22 stoßfest angeordnete großflächige Glimmentladungslampe 24. Im Rahmen 22 allseitig durch dessen abgewinkelten Rand 25 umgeben ist eine vordere stoßfeste transparente Abdeckplatte, beispielsweise eine Verbundglasscheibe 26, festgelegt.

Der freie Innenraum ist vollständig mit einem Kunstharz 27 ausgegossen. Dadurch und ggf. durch weitere Dichtungsmittel wird das Eindringen von Staub, Flüssigkeiten, Dämpfen und Gasen sicher verhindert.

Diese Flachleuchte kann als eigenständiger Baukörper an der Innenseite der Seitenwand 14 befestigt werden, wobei die elektrischen Steuerelemente und Schaltungen an der Außenseite der Seitenwand angeordnet und über druckdichte Kabel 28 mit der Glimmentladungslampe 24 verbunden sein können. Wie der Darstellung zu entnehmen ist, befmdet sich die Flachleuchte 21 direkt neben dem Arbeitsraum oberhalb des Werkstücktisches. Da die Leuchtstärke der Flachleuchte über ihre gesamte Fläche weitgehend konstant ist, ergibt sich eine optimale Ausleuchtung des Arbeitsbereichs, so daß der jeweilige Bediener die Bearbeitungsvorgänge bei geschlossener Rundtür 15 durch deren Fenster 17 genau beobachten kann.

Die in Fig. 3 im Querschnitt dargestellte Flachleuchte 30 entspricht im wesentlichen der Ausführung nach Fig. 2, wobei gleiche Bauteile mit den gleichen Bezugszeichen gekennzeichnet sind. Auch bei dieser Flachleuchte wird eine nach dem eingangs als bekannt angegebenen Funktionsprinzip arbeitende Glimmentladungslampe 24 verwendet, die in einem geschlossenen Gehäuse 31 stoßfest montiert ist. Das Gehäuse 31 enthält an einer Seite eine Kammer 32, in welcher die elektrischen bzw. elektronischen Schaltelemente 33 geschützt untergebracht sind. Ein Versorgungskabel 34 führt in die Kammer 3. An der Bodenplatte des aus Blech oder Kunststoff gefertigten Gehäuses 31 ist ein gewelltes Dünnblech 35 aus einem gut wärmeleitenden Material, vorzugsweise einem Leichtmetall, befestigt, um die Wärmeabfuhr aus dem Gehäuseinneren zu begünstigen. Zur verbesserten Wärmeabfuhr können die Bodenplatte und/oder auch andere Wandelemente profiliert, z.B. wellen- oder zickzackförmig, ausgebildet sein, wobei diese Wandteile zweckmäßig aus Leichtmetall bestehen sollten. Auch abstehende Kühlrippen können verwendet werden.

In dem flacheren Bereich neben der Kammer 32 ist eine Stützhalterung 36 vorgesehen, mit welcher die Leuchte 30 an einem Bauteil der Werkzeugmaschine verstellbar befestigt wird. Die hier dargestellte Stützhalterung 36 weist ein als Kugelschale wirkendes Stützelement 37 mit seitlichen Bohrungen 38 und einer zentralen Kalottenausnehmung 39 auf. In dieser Kalottenausnehmung 39 sitzt eine Kugel 40. Mit der Rückwand des Gehäuses 31 ist eine Platte 42 fest verbunden, die in ihrem mittleren Bereich eine Aussparung 43 und daneben zwei Bohrungen 44 aufweist, die mit den Bohrungen 38 im Stützelement 37 fluchten und Schraubbolzen aufnehmen können. Die dargestellte Stützhalterung 36 bildet ein verstellbares Kalotten- bzw. Kugelschalen-Lager, das z.B. durch Schraubbolzen fixierbar ist.

Die Anordnung der Flachleuchte 21 ist natürlich nicht auf die in der Zeichnung dargestellte Position beschränkt. Vielmehr können auch schmale Flachleuchten an geeigneten anderen Stellend er Seitenwandungen oder auch der Ständerrückwand allein oder in Kombination mit großflächigen Flachleuchten positioniert werden. Wesentlich ist, daß die jeweiligen Flachleuchten nur in einem geringen Maß in den Innenraum der Schutzkabine hineinragen, so daß bei optimierter Ausleuchtung des Arbeitsraumes der Bewegungsfreiraum innerhalb der Schutzkabine nicht eingeschränkt wird.

## Patentansprüche

1. Werkzeugmaschine mit Schutzkabine und Beleuchtungssystem, das mindestens eine im Innenraum der Schutzkabine (10) an einer Kabinenwand (14) installierte Entladungslampe aufweist, die als großflächig abstrahlende Flachleuchte (21) ausgebildet ist,
**dadurch gekennzeichnet daß**
die Flachleuchte (21) einen flächigen Leuchtkörper (24) enthält, der über seine gesamte Fläche mit gleichmäßiger Leuchtstärke abstrahlt und in einem flachen gasdichten Gehäuse (23) mit einseitiger transparenter Platte (26) gekapselt angeordnet ist.

2. Werkzeugmaschine nach Anspruch 1,
**dadurch gekennzeichnet, daß**
die Flachleuchte (21) eine Dicke von etwa bis zu 30 mm und eine eckige, runde oder ovale Form hat,

3. Werkzeugmaschine nach Anspruch 1 oder 2,
**dadurch gekennzeichnet, daß**
eine oder mehrere Flachleuchten (21) an der Innenseite einer Kabinenwand (14) bzw, an der Kabinendecke montiert sind.

4. Werkzeugmaschine nach einem der vorstehenden Ansprüche,
**dadurch gekennzeichnet, daß**
eine oder mehrere Flachleuchten (21) in formgleichen Ausschnitten einer Kabinenwand (14) bzw. der Kabinendecke abgedichtet eingebaut sind.

5. Werkzeugmaschine nach einem der vorstehenden Ansprüche,
**dadurch gekennzeichnet, daß**
die Flachleuchten (21) in planparalleler Ausrichtung oder in einstellbarer Schräglage an einer Kabinenwand (14) angeordnet sind.

6. Werkzeugmaschine nach Anspruch 5,
**dadurch gekennzeichnet, daß**
die Flachleuchten (30) über verstellbare Stützhalterungen (36) an dem jeweiligen Maschinenteil montierbar sind.

7. Werkzeugmaschine nach Anspruch 6,
**dadurch gekennzeichnet, daß**
die Stützhalterungen (36) fixierbare Kalottenlagerungen enthalten.

8. Werkzeugmaschine nach einem der vorstehenden Ansprüche,
**dadurch gekennzeichnet, daß**
zumindest die Rückwand des Gehäuses (31) der Flachleuchte (30) Elemente (35) zur verstärkten Wärmeabfuhr enthält.

9. Werkzeugmaschine nach einem der vorstehenden Ansprüche,
**dadurch gekennzeichnet, daß**
im Gehäuse (31) eine Flachkammer (32) zur Aufnahme der elektrisch/elektronischen Schaltelemente (33) vorgesehen ist.

## Claims

1. A machine tool comprising a protective cabinet and an illumination system with at least one discharge lamp (10) installed on a cabinet wall (14) in the interior space of said protective cabinet (10) and being formed as a flat lamp (21) configured to radiate over a large area,
**characterized in that**
said flat lamp (21) comprises a flat luminous element (24) which radiates with a uniform luminous intensity over its entire surface and is encapsulated in a flat gas-tight housing (23) including a transparent plate (26) on one side.

2. The machine tool according to claim 1,
**characterized in that**
said flat lamp (21) has a thickness of approximately up to 30 mm and an angled, round or oval shape.

3. The machine tool according to claim 1 or 2,
**characterized in that**
one or more flat lamps (21) are mounted on the inner side of a cabinet wall (14) or on the cabinet ceiling.

4. The machine tool according to any one of the preceding claims,
**characterized in that**
one or more flat lamps (21) are installed in indentations of identical shape in a cabinet wall (14) or in the cabinet ceiling in a sealed manner.

5. The machine tool according to any one of the preceding claims,
**characterized in that**
the flat lamps (21) are disposed on a cabinet wall (14) in a plane-parallel orientation or in an adjustable oblique posture.

6. The machine tool according to claim 5,
**characterized in that**
the flat lamps (30) are mountable to the respective machine part via adjustable supports (36).

7. The machine tool according to claim 6,
**characterized in that**
the supports (36) contain fixable spherical surface bearings.

8. The machine tool according to any one of the preceding claims,
**characterized in that**
at least the rear wall of the housing (31) of the flat lamp (30) comprises elements (35) for enhanced heat dissipation.

9. The machine tool according to any one of the preceding claims,
**characterized in that**
the housing (31) is provided with a flat chamber (32) for accommodating the electric/electronic switching elements (33).

## Revendications

1. Machine outil comportant une cabine de protection et un système d'éclairage, qui présente au moins une lampe à décharge installée dans l'espace interne de la cabine de protection (10) sur une paroi de la cabine (14), qui est conçue sous la forme d'un luminaire plat (21) irradiant sur une grande surface,
**caractérisée en ce que**
le luminaire plat (21) contient un corps lumineux plat (24), qui irradie d'une intensité lumineuse uniforme sur toute sa surface et est disposé dans un boîtier (23) plat étanche aux gaz, encapsulé avec une plaque transparente (26) unilatérale.

2. Machine outil selon la revendication 1,
**caractérisée en ce que**
le luminaire plat (21) présente une épaisseur pouvant aller jusqu'à environ 30 mm et une forme rectangulaire, ronde ou ovale.

3. Machine outil selon la revendication 1 ou 2,
**caractérisée en ce que**
un ou plusieurs luminaires plats (21) sont montés sur la face interne d'une paroi de la cabine (14) ou sur le couvercle de la cabine.

4. Machine outil selon l'une des revendications précédentes,
**caractérisée en ce que**
un ou plusieurs luminaires plats (21) sont encastrés de manière étanche dans des excavations de même forme sur une paroi de la cabine (14) ou du couvercle de la cabine.

5. Machine outil selon l'une des revendications précédentes,
**caractérisée en ce que**
les luminaires plats (21) sont disposés selon une orientation parallèle au plan ou dans une position oblique réglable sur une paroi de la cabine (14).

6. Machine outil selon la revendication 5,
**caractérisée en ce que**
les luminaires plats (30) peuvent être montés sur la partie respective de la machine par le biais de supports d'appui ajustables (36).

7. Machine outil selon la revendication 6,
**caractérisée en ce que**
les supports d'appui (36) comportent des paliers concaves fixables.

8. Machine outil selon l'une des revendications précédentes,
**caractérisée en ce que**
au moins la paroi arrière du boîtier (31) du luminaire plat (30) contient des éléments (35) pour un apport de chaleur accru.

9. Machine outil selon l'une des revendications précédentes,
**caractérisée en ce que**
une chambre présentant une surface plane (32) pour la réception d'éléments de circuit électrique/électronique (33) est prévue dans le boîtier (31).
